Europäisches Patentamt

European Patent Office

Office européen des brevets

(11) Publication number: **0 180 552**
**B1**

# EUROPEAN PATENT SPECIFICATION

(45) Date of publication of patent specification: **09.01.91**

(51) Int. Cl.⁵: **B 60 T 13/16, B 62 D 11/08**

(21) Application number: **85830228.4**

(22) Date of filing: **11.09.85**

(54) Improvements in braking systems, particularly for agricultural tractors and trailers.

(30) Priority: **12.09.84 IT 4882884**
**11.09.85 IT 4854385**

(43) Date of publication of application:
**07.05.86 Bulletin 86/19**

(45) Publication of the grant of the patent:
**09.01.91 Bulletin 91/02**

(84) Designated Contracting States:
**AT BE CH DE FR GB LI LU NL SE**

(56) References cited:
**EP-A-0 015 689**
**EP-A-0 114 502**
**FR-A-2 144 804**
**FR-A-2 470 884**
**US-A-2 998 025**
**US-A-4 159 854**

(73) Proprietor: **Ferruzza, Roberto**
**Strada Statale 386, Km. 1**
**I-92016 Ribera (Agrigento) (IT)**

(72) Inventor: **Ferruzza, Roberto**
**Strada Statale 386, Km. 1**
**I-92016 Ribera (Agrigento) (IT)**

(74) Representative: **Sneider, Massimo**
**Lenzi & C. Via Lucania, 13**
**I-00187 Roma (IT)**

Courier Press, Leamington Spa, England.

## Description

It is known that in the case where the brakes of a vehicle are actuated through a fluid under pressure, provided by a pump, the pressure value and consequently the braking effect should be always proportional to the force applied by the driver to the member controlling the braking action (pedal or hand lever), so that it will possible to decelerate the vehicle according to the needs.

In the case of a tractor with a trailer, the trailer's brakes being actuated through a fluid under pressure, provided by a pump, the braking effect on the trailer should be at each moment proportional to the braking effect on the tractor, in order to obtain the same value of deceleration to both vehicles, and per consequence, to assure the directional stability during the braking.

Obviously, a certain very short delay (0.3—0.5 sec.) between the beginning of the braking of the tractor and the beginning of the braking of the trailer (due to the fact that the increasing of the fluid pressure actuating the trailer's brakes is depending on yet existing, even very low, actuating force on the tractor's braking system) should be taken into account and it is accepted from the present international rules.

In some vehicles, however, on the wheel or crawler tractors, two pedals are provided to actuate the brakes, the pedals controlling separately and independently the braking devices of the right side and the braking devices on the left side, in order to obtain the necessary mobility off-the-road, increasing with such braking system, the steerability of the vehicle.

On the road, again, it is compulsory to operate the two brake devices simultaneously which allows to maintain the previous direction during the braking, and this is normally achieved by pressing the two brake pedals also simultaneously, actuating thus the brakes on both sides of the vehicle.

Now, normally, on-the-road the two brake pedals are tied together through latch or similar device, but if the driver forgets to tie together the two pedals, and casually pushes on one pedal only, he will actuate one only of the two braking systems; the tractor deceleration will be reduced to 50%, but the steering system will be sufficient to maintain the tractor on the previous direction.

In the case, however, that a trailer is connected to the tractor, since the trailer, if loaded, has a weight exceeding by 4 or 5 times the tractor weight, it is absolutely necessary, when acting upon one pedal only, for the driver to be able to obtain the full braking power on the trailer, apart from the full braking effect on the tractor, whichever be the type of transmission of the controlling action to the braking members of the tractor, that is both in the case of a hydrostatic transmission and of a mechanical one.

In the EP—A—0 015 689, which corresponds to the preamble of Claim 1, the proportionality between the pressure in the tractor's braking circuit and the pressure in the trailer's braking circuit is obtained by completely closing communication between the delivery and discharge sides of the circuit fed by the tractor pump, and the operation of the pilot valve simultaneously causes closure of communication between the delivery and discharge and the opening of communication between the delivery side and the trailer's braking circuit. In fact, acting directly on the valve, without any intervention of a pilot valve, it is obtained only to reduce dramatically the delay between the beginning of the braking on the tractor and the beginning of the braking on the trailer.

Therefore, the aforesaid prior art device is lacking of a reasonably linear and stable relationship between driver's braking force and actual force delivered from the servo valve and also of a uniform distribution of the braking forces applied, independently from the action on one or two pedals.

An object of the present invention is a modulating unit actuated directly from very low pressure in the tractor circuit with the purpose of creating, in the trailer circuit, a certain pressure proportional to the pressure in the tractor circuit, permitting to achieve the above mentioned purposes, obviating the drawbacks presented by the servo assisted braking systems actually in use, acting directly on the valve.

Another object of the present invention is a device securing the automatic, continuous braking of a trailer, even by acting upon one only of the tractor's brake pedals. According the invention, the braking system on the trailer can be actuated also acting on one only, either the right or the left, brake pedal of the tractor, and assure the highest degree of safety on the road. Of course in the case of a tractor with a trailer, off-the-road, it is not useful to brake only one side system on the tractor.

Still another object of the invention is a device permitting to secure the braking action of the tractors and/or the trailer even in the case that, by any reason, the modulated pressure, that is the pressure proportional to the load applied from the driver to the brake pedal or pedals, falls below the prefixed limit, established as a function of the pressure or the controlling force.

Still a further object of the invention is to render feasible the ultilization of the modulator as a power brake.

These objects are achieved by the features of Claim 1.

The modulating unit according to the present invention comprises a valve, having an axial or rotational movement, which receives the controlling action through the fluid of a hydrostatic circuit, arriving from the controlling member (pedal or hand lever) of the braking system, the valve providing to adjust, by its movement, the passage of the medium from the delivery section of the pump to the return to the tank, in which the pump does the intake, so that the medium is subjected to pressure, thus rendering it apt to operate the actuating pistons of the brakes.

Of said unit it is also part a piston or similar, which confers the modulating function to the unit itself, and which is operated by the pressure that is generated in the system in such way to oppose the movement of said valve. It follows that the force needed in order to operate the pump is proportional to the pressure generated by this actuation.

The unit is completed by a centering spring, of a suitable limited-load type, or by other similar means, so that, given the centering in the "fully open" position, the operation of putting the circuit under pressure takes place with extremely reduced loads exerted upon the controlling members, said loads being of the same order of magnitude of those needed in order to achieve the recovery of the slacks of the lever assemblies which are part of the conventional braking systems.

The invention will be better understood from the reading of the description of one of its embodiments, given with reference to the enclosed drawings, in which:

Figure 1 shows schematically and in section the pressure modulating unit:

Figure 2 shows the arrangement of a device to achieve the complete braking of the trailer, through the operation of one only of two brake pedals of the tractor;

Figure 3 shows schematically the safety means against possible failures or operating irregularities of the modulated pressure circuit;

Figure 4 shows the diagram of a device permitting the utilization of the pressure modulator as a power brake;

Figure 5 shows a modification of the diagram of Figure 4.

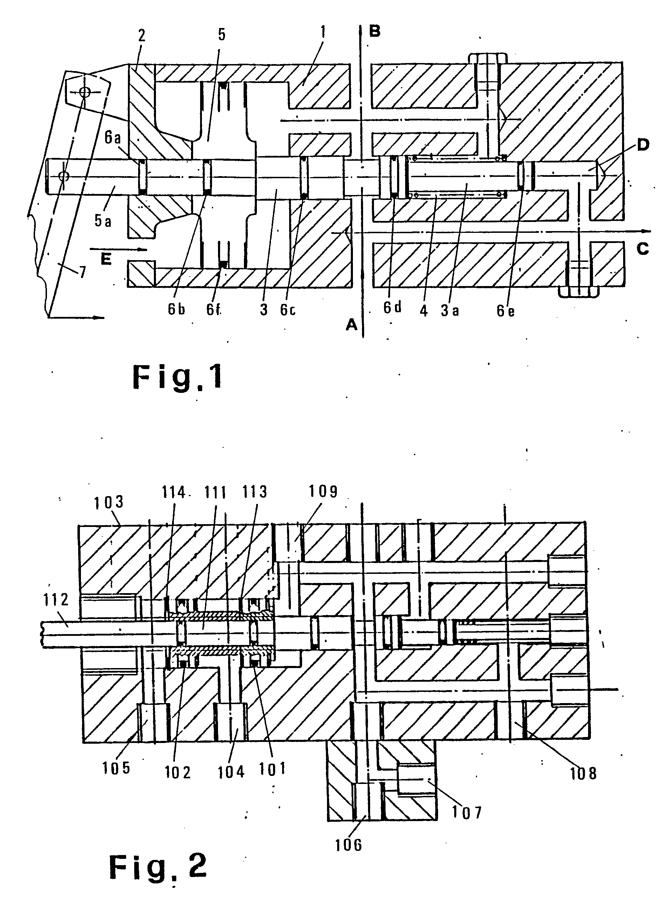

With reference to said drawings, and in particular to Figure 1, within the body 1 of the unit a valve 3 is housed which, by its movement, causes the variation of the cross-section of the free communication port between the inlet A of the fluid (oil) for controlling the brakes and the outlet B which returns the oil itself to the tank, not represented, from which the pump circulating the oil does the intake. Through the bore C, the oil entering from A and finding partially or totally blocked the way of direct passage towards B, goes to the cylinders of the brakes, causing the displacement of the relevant pistons and causing the desired braking action. The valve 3 has been indicated as a valve of the axial sliding type but can be a valve provided, for instance, with a rotational movement. The medium will be subjected to pressure, and the pressure will be the consequence of the combined action of the pump and of the direct passage port between A and B; the braking action on the vehicle will be, therefore, proportional to the pressure to which the medium is subjected.

The unit must also permit the desired pressure modulation, according to a direct proportionality law or according to a proportionality law deemed to be suitable according to the requirements. To this end, a small piston 3a is foreseen upon which acts, through the bore D, the pressure generated in the braking circuit by the movement of the valve 3, said small piston 3a acting upon the valve 3 itself in a direction opposed to the movement to which the valve is subjected, so that by the part of the control device of the valve 3 the application is required of an equal and opposite force, and, therefore, of a force directly proportional to the pressure which has been generated in the braking circuit.

As previously mentioned, the modulator of the invention may be applied to mechanically as well as hydraulically controlled braking systems. To this end, according to the invention, the valve 3 is controlled by a member, for instance a rod 5a, upon whose head the valve 3 itself rests, so that it will be not rigidly connected with the member 5a. The rod 5a can be actuated by the lever 7, or else on it the control piston 5 can be fixed which receives, through the port E, the pressure of a control fluid, oil for instance, of a hydrostatic circuit, said pressure being determined by the force applied by the driver to the control member of the brake (pedal or lever). The medium may be that which acts upon the hydrostatically controlled brakes of a tractor constituted by a wheeled agricultural tractor, the modulating unit of the invention being intended for the braking system of the trailer of the tractor itself, so that, by the effect of the previously mentioned modulation, also the direct proportionality is achieved between the actuating pressure of the tractor's brakes and the pressure of the trailer's brakes.

As one can derive from what has been previously said, the actuation of the valve 3 is obtained, simultaneously and independently by an hydraulic unit and by a mechanical member, through the application of a force by means of the brake pedal and/or the lever of the tractor's hand brake. This feasibility of a double independently control is obtained, for instance, for foreseeing that the piston 5 be pierced; through it, by the intermediation of the suitable seals 6a—6e, the mechanical control member 3 of the valve 3 will pass, or else the extension of the stem of the valve 3, which will, thus, be able to displace itself by the effect of the control action imparted to it without a displacement of the piston 5 and vice versa.

The returning of the valve 3 to the rest position, that is to the position of a complete opening of the direct communication between the inlet A and the exhaust B of the medium, is achieved, according to the invention, by means of a spring 4, having such characteristics to permit the reduction to the minimum of the load to be applied to the valve 3 in order to cause its displacement towards its position of blocking to the passage of fluid and, anyway, a reduction below the value of the approach load of the actuating members of a conventional braking system, in such a way to permit that, in the particular case wherein the unit according to the invention is mounted on the braking circuit of a trailer, the braking of the trailer itself will take place without any appreciable delay with respect to the tractor's braking.

It is to be observed that it is suitable that in servo assisted braking systems, and in every case in which this appears to be convenient, the fluid between the inlet A and the outlets B and C be subjected to a convenient pressure, above all for the control of the automatic valve foreseen in another Ferruzza patent referring to "A Continuous braking system". The unit is also equipped with a safety valve, which is set at the maximum operating pressure.

As it can be seen from the above, by the unit of the invention it is possible to achieve all the prefixed purposes. In particular, the braking modulation is achieved in such a way that the braking will correspond to the force with which the driver actuates the relevant control member, be it a pedal or a lever, whether the vehicle to brake is a tractor or a trailer or both; furthermore, one can act upon the trailer's brake with the needed and indispensable advance. It is also to be observed that the modulation itself of the braking effects the result that the braking system will answer with immediateness to the control actions imparted to it. By the modulating unit of the invention one achieves the real and basic purpose of the servo controlled brakes, that is to act as multipliers of the work effected by the driver. Lastly, it is to be observed also the direct proportionality which is achieved between the tractor's brakes actuation pressure and the trailer's brakes actuation pressure.

With reference, then, to Figure 2, in order to ensure the continuous automatic braking of a trailer in the case the tractor is equipped with two foot brake pedals, and in the case of tractors equipped with a hydrostatic transmission, the (linear or angular) displacement of the pressure modulator's valve is achieved by means of two pistons 101 and 102, which are housed in a single cylinder 111, machined into a body 103.

The body 103, apart from the pistons 101 and 102, is provided with ports 104, and 105 respectively, for the access of the pressure from the master cylinder of the right brake, or respectively of the left brake, as well as with a port 106 for the inlet of the pump oil, as well as with a port 107 for the connection of the automatic valve (reference valve), as well as with a port 108 for sending the modulated pressure to the automatic valve, and with a port 109 for the exhaust.

Within the cylinder 111, as said, two pistons 101 and 102 are housed, which are not connected mechanically with each other, as well as two shoulders 113 and 114 which limit the movement of the pistons 101 and 102, as it will explained in the following.

If one actuates the right foot brake pedal, the pressure generated in the corresponding master cylinder, through the port 104, reaches the piston 101 and displaces it, so that the automatic valve will be displaced, the piston 102, on the contrary, will be not displaced since it is situated against the shoulder 114 of the piston 111.

If one actuates the left foot brake pedal, through the port 105 the pressure acts upon the piston 102 which undergoes a displacement, causing also the displacement of the piston 101 and displacing, therefore, the automatic valve.

If, then, one acts simultaneously upon both the foot brake pedals, since the pressures generated by such operation are exactly equal to each other (by the effect of the balancing valve, always existing in the tractor's braking system), the piston 102 will be subjected to two equal and opposite forces and, therefore, won't undergo any displacement, whereas the piston 101 will displace itself, actuating the automatic valve.

The absorbed oil volume will be always the same for each of the three above listed possible cases.

In the case the tractor is provided with a service braking system having a transmission of a mechanical type, and, therefore in the case of braking systems of the mixed automatic type, it will suffice to realize for each foot brake pedal of the tractor a separate connection 112 which acts upon the abovedescribed device; the connection, apart the feasibility of being of a mechanical type, may be also of a different type, for instance of a hydraulic, electric type, and so on. The only proviso to respect is that the two connections shall be such that the movement of one of them doesn't imply also the movement of the other, but both shall be able to move if both the pedals will be actuated simultaneously. Furthermore, each of said connections shall contain a resilient member which will permit the back pressure acting upon the modulator's valve to cause the variation of the movement of such valve with respect to what is imposed by the movement of the foot brake pedal (pedals) of the tractor, this condition being essential in order to achieve the modulation of the trailer's braking. In oher words, the foot brake pedals of the tractor will actuate a suitable resilient member able to ensure a force proportional to the displacement of said foot brake pedals, giving to the driver the feeling of the load's increase, and which transfers such force to a piston acting upon the oil of a separate hydrostatic circuit (or directly) acting upon the distributor of the modulator, so that the proportionality will be assured between the load applied by the driver upon the foot brake pedals and the corresponding values of the modulated pressure, condition, this, which is necessary in order to get a brake of the continuous type.

In other words, by virtue of the above described device, it will be always feasible, even acting upon one foot brake pedal only and without any mechanical connection with the other pedal, to achieve for the trailer a complete braking action of the automatic continuous type.

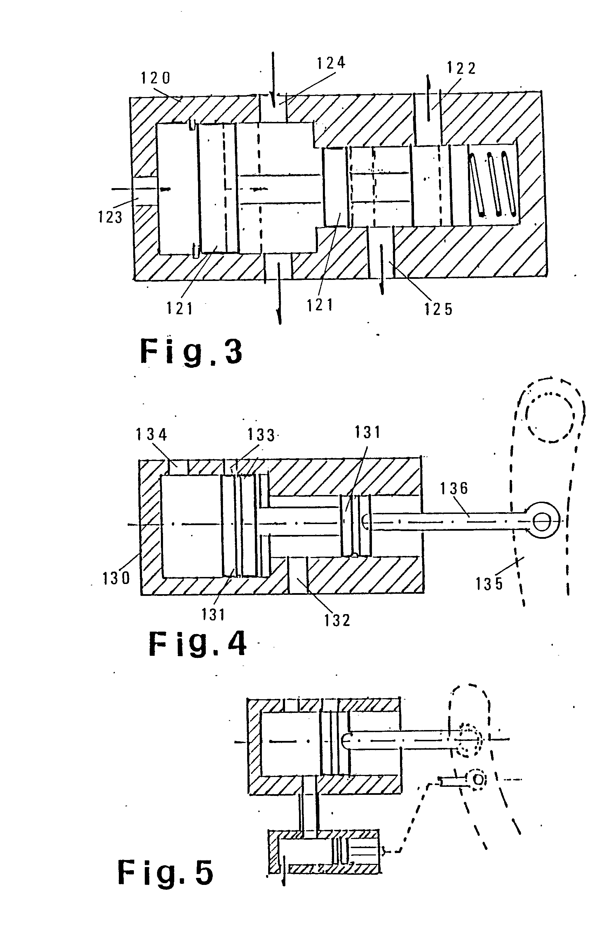

As mentioned in the general part of this description, and with reference to Figure 3 in particular, it may always happen that, for any fortuitous reason, as a disconnection or a breaking, an irregular working of the modulated pressure circuit, takes place.

In order to obviate the serious drawbacks which could happen, a valve is foreseen, by-passing the pilot pressure circuit, said valve being represented in the Figure as a valve 120 of an axial type, but which may be of any other suitable type, this valve being provided with a differential piston 121, upon which, through the port 123, the pressure acts of the tractor's braking circuit. Through the port 125, upon the other surface of the piston 121, the pilot pressure acts. Upon the differential piston 121, acts, also through the port 124, the modulated pressure generated, by the effect of the operation of the foot brake pedals, in the pressure modulator. The piston 121, owing to the effect of said two pressures and owing to the presence of a suitable centering spring, keeps an equilibrium position, leaving free the passage of the modulated pressure through the port 124. If a failure takes place in the modulated pressure circuit, so that said pressure falls below the prefixed value (proportional to the hydrostatic pressure), the piston 121 displaces itself, thus putting in communication the port 125 of pilot pressure arrival with the exhaust 122. It follows that if the modulated pressure fails to reach the prefixed values, the pilot pressure falls to zero and, therefore, the emergency braking action of the trailer automatically enters into action.

As previously mentioned, always within the scope of the improvements to the braking systems, it is possible to utilize the pressure modulator as a power brake. As illustrated in Figure 4, into a valve body 130, is sent, through the port 132, against a surface of the differential piston 131, the modulated pressure arriving from the modulator (not represented). The valve's chamber is put into communication, through the port 133, with the brake oil tank, and, through the port 34, with the brake pipe of the tractor. As it can be observed, the modulated pressure acts in series with the load applied by the driver upon the pedal 135 through the action of the lever 136, so that the same values of the actuating pressure of the braking member of the tractor are achieved with a reduced effort by the driver's part, permitting however the driver to exert the complete braking action in the case of a failure of the modulated presure circuit.

In Figure 5 the differential piston 131 is shown separate and arranged within two distinct cylinders.

The improvements to the braking systems, particularly of agricultural tractors and trailers, have been described and illustrated only by way of a non limitative example.

**Claims**

1. Braking system, particularly for agricultural tractors and trailers, in which the brakes are operated by a fluid under pressure, consisting of a modulating device formed by a valve (3) movable axially or rotationally, the movement of the valve causing a reduction in the outlet area of the fluid flow provided by a hydraulic pump; and as a consequence causing an increase in the pressure which, acting on the brakes of the vehicle (tractor or trailer) will cause their actuation, the same pressure also acting on a small piston (or similar device) (3a) producing a force on the modulating valve in the opposite direction of its movement, and causing a modulation of the pressure proportional to the force applied by the driver on the braking system control member (foot pedal or hand lever), in order to operate the modulating valve, the valve being connected, mechanically or hydraulically (5a) to the control members, characterized in that the valve creating the pressure in the trailer circuit is actuated at any time directly by a very low pressure (lower than 15 atm.) in the tractor circuit, in order to achieve a quick response by the braking circuit itself, and in that a safety valve is foreseen, which is set at the value of the maximum permissible operating pressure, and in the case that the tractor is equipped with two independent brake systems (right side and left side) the above mentioned valve (3) of the pressure modulator is actioned by means of two devices (101, 102) made up of pistons, which are not rigidly connected to each other, each one being hydraulically linked with one of the braking elements already existing on the tractor in order to ensure automatic continuous braking of the trailer, even when using only one of the systems, because by pressing down the brake pedal of the tractor which is hydraulically connected to the device or piston (102) the piston itself is set into motion and this acts on the valve without causing the movement of the other device or piston (101), whilst pressing the other brake pedal of the tractor; which is hydraulically connected to the piston (101), the piston itself is set into motion thus acting on the piston 102 and, through this, on the valve.

2. Braking system according to Claim 1, characterized in that in order to assure the automatic continuous braking of a trailer, in the case the tractor be equipped with two foot brake pedals, each actuating an independent brake system (right side or left side), and in the case of tractor brake systems having a hydrostatic transmission, the two independent devices operating the (linear or angular) displacement of the pressure modulator valve are two pistons (101 and 102) not mechanically connected to each other and slidable within a cylinder (111) machined within a body (103) which possesses ports (104 and respectively 105) for the access of the pressure from the master cylinder of the right and left brakes respectively, as well as a port (106) for the inlet of the pump oil, (107) for the connection with the automatic valve (reference pressure), (108) for sending the modulated pressure to the automatic valve and (109) for the exaust.

3. Braking system according to Claim 2, wherein two shoulders (113 and 114) are limiting the movement of the pistons (101 and 102) not mechanically connected with each other.

4. Braking system according to Claim 2, characterized by that a valve (120) (of any suitable type) is foreseen, which causes the intervention of the automatic valve on the trailer, so that the emergency braking of the trailer will be assured when a braking or a pressure drop-down takes place in the modulated pressure circuit.

5. Braking system according to Claim 1, characterized by that the modulated pressure arriving from the modulator is sent, through a port (132) against a surface of a differential piston (131) housed within a valve body (130), the valve's chamber being connected via the port (133), with the brake oil tank and, through a port (134), with the brake pipe of the tractor, so that the modulated pressure acts in series with the load applied by the driver upon the pedal (135) of the brake.

## Patentansprüche

1. Bremssystem, insbesondere für Ackerschlepper und Anhänger, bei dem die Bremsen von einem Fluid unter Druck betätigt sind, bestehend aus einer von einem achsial oder rotierend beweglichen Ventil (3) geformten Modulatorvorrichtung, wobei die Bewegung des Ventils eine Verkleinerung im Auslaufgebiet des mit einer Hydraulikpumpe versehenen Fluidflusses bewirkt und als Folge eine Erhöhung im Druck bewirkt, welcher auf die Bremsen des Fahrzeuges (Schlepper oder Anhänger) wirkend deren Betätigung verursachen wird, derselbe Druck auch auf einen kleinen Kolben (oder ähliche Vorrichtung) (3a) wirkend eine Kraft auf dem Modulatorventil in der entgegengesetzten Richtung zu dessen Bewegung erzeugt und eine Modulation des Druckes bewirkt, welcher zu der vom Fahrer auf das Steuerorgan des Bremssystems (Pedal oder Handhebel) aufgebrachten Kraft proportional ist um das Modulatorventil zu benützen, wobei das Ventil mit den Steuerorganen mechanisch oder hydraulisch (5a) verbunden ist, dadurch gekennzeichnet, dass das den Druck im Kreislauf des Anhängers erzeugende Ventil in jeden Augenblick unmittelbar von einem sehr niedrigen Druck (niedriger als 15 atm), welcher im Kreislauf des Schleppers herrscht, betätigt ist um eine rasche Ant wort seitens des Bremskreislaufes selbst zu erhalten, und daurch, dass ein Sicherheitsventil vorgesehen ist, welches auf den Wert des höchst zulässigen Arbeitsdruckes gestellt ist; und wenn der Schlepper mit zwei unabhängigen Bremssystemen (rechte Seite und linke Seite) versehen ist, dann ist das vorgenannte Ventil (3) des Druckmodulators vermittels zweier Vorrichtungen (101, 102) betätigt, welche von Kolben gebildet sind, die nicht starr miteinander verbunden sind, jeder ist dabei hydraulisch mit einem der am Schlepper bereits vorhandenen Bremselemente verbunden um eine automatische kontinuierliche Bremsung des Anhängers zu gewährleisten, auch wenn nur eines des Systems verwendet wird, denn beim Ansenken des Pedals der Bremse des Schlepper, welche mit der Vorrichtung oder dem Kolben (102) hydraulisch verbunden ist, ist der Kolben selbst in Bewegung gestellt und wirkt so auf das Ventil ohne die Bewegung der anderen Vorrichtung oder des Kolbens (101) zu verursachen, während das Pedal der anderen Bremse des Schleppers gedrückt wird, welche hydraulisch mit dem Kolben .(101) verbunden ist, der Kolben selbst so auf den Kolben (102) wirkend ist in Bewegung versetzt und über letezeren auf das Ventil.

2. Bremssystem, nach Anspruch 1, dadurch gekennzeichnet, dass um die kontinuierliche Bremsung eines Anhängers zu gewährleisten, wenn der Schlepper mit zwei Bremspedalen ausgerüstet ist, jedes ein unabhängigers Bremssystem betätigend (rechte Seite und linke Seite), und im Fall von Bremssystemen des Schleppers mit Hydrogetriebe, die das Modulatorventil betätigenden unabhängigen Vorrichtungen zwei mechanisch nicht miteinander verbundene Kolben (101, 102) sind und verschiebbar sind in einem in einem Körper (103) realisierten Zylinder (111), welche Öffnungen (104 bzw. 105) besitzt für den Zutritt des Druckes vom Hauptzylinder der Bremsen rechts bzw. links, wie auch eine Öffnung (106) für den Einlass des Öls der Pumpe, (107) für die Verbindung mit dem automatischen Ventil (Bezugsdruck) (108) um den modulierten Druck zum automatischen Ventil und (109) für den Auslass zu senden.

3. Bremssystem, nach Anspruch 2, bei dem zwei Schultern (113 und 114) die Bewegung der mechanisch nicht miteinander verbundenen Kolben (101 und 102) begrenzen.

4. Bremssystem, nach Anspruch 2, dadurch gekennzeichnet, dass eine Ventil (120) beliebiger geeigneter Art vorgesehen ist, welches das Eingeifen des automatischen Ventils am Anhänger verursacht, derart dass die Notbremsung des Anhängers gewährleistet ist, wenn eine Bremsung oder ein Druckabfall im Kreislauf des modulierten Druckes stattfindet.

5. Bremssystem, nach Anspruch 1, dadurch gekennzeichnet, dass der modulierte Druck, welcher vom Modulator kommt, durch eine Öffnung (132) gegen die Oberfläche eines Differentialkolbens (131) gelenkt ist, welcher im Ventilkörpere (130) gelagert ist, die Ventilkammer ist dabei vermittels der Offnung (133) mit dem Behälter des Öls der Bremsen verbunden und, über eine Offnung (134), mit der Rohrleitung der Bremsen des Schleppers, derart dass der modulierte Druck in Reihe wirkt mit der vom Fahrer auf das Pedal (135) der Bremse aufgebrachten Last.

## Revendications

1. Système de freinage, en particulier pour tracteurs agricoles et remorques, dans lequel les freins sont actionnés par un fluide sous pression, et consistant en un dispositif modulateur formé par une soupape (3) mobile dans le sens axial ou par rotation, le mouvement de la soupape entraînant une réduction dans la zone de sortie di flux de fluide (mini d'une pompe hydraulique) et, comme causant, par voie de conséquence, un accroissement de la pression qui, en agissant sur les freins du véhicule (tracteur ou remorque), les fera fonctionner, la même pression agissant également sur un piston (ou dispositif similaire) (3a). Cette pression produit une force sur la soupape modulatrice dans la direction opposée à son mouvement, et provoque une modulation de la pression proportionnelle à la force appliquée par le conducteur sur l'organe de commande du système de freinage (pédale ou levier à main) pour agir sur la soupape modlatrice; la soupape est reliée mécaniquement ou hydrauliquement (5A) aux organes de commande. La soupape créant la pression dans le circuit de la remorque est actionnée à tout moment directement par une pression très basse (inférieure à 15 atm.) dans le circuit du tracteur, pour que la réponse du circuit de freinage soit rapide. Une soupape de sécurité est prévue, placée à la valeur de la pression d'exercice maximum acceptable; et si le tracteur est équipé de deux système de freinage indépendants (côté droit et côté gauche) la soupape en question (3) du modulateur de pression est actionnée par deux dispositifs (101, 102) formés par des pistons qui ne sont pas reliés l'un à l'autre de façon rigide, chacun étant relié hydrauliquement à un des éléments freinants existant déjà sur le tracteur pour assurer un freinage continu automatique de la remorque, même lorsque l'on utilise un seul élément du système; en effet, en abaissant la pédale du frein du tracteur, qui est reliée hydrauliquement au dispositif, ou piston (102), on met le piston en mouvement, ce qui agit sur la soupape sans provoquer le mouvement de l'autre dispositif ou piston (101); tandis que l'on appuie sur la pédale de l'autre frein du tracteur, qui est hydrauliquement reliée au piston (101), on met en mouvement le piston, en agissant de ce fait sur le piston (102) et, à travers lui, sur la soupape.

2. Système de freinage selon la revendication 1, caractérisé par le fait que, pour assurer le freinage continu d'une remorque, au cas où le tracteur soit équipé de deux pédales de frein, chacune actionnant un système de freinage indépendant (côté droit et côté gauche), et en cas de systèmes de freinage du tracteur à transmission hydrostatique, les deux dispositifs indépendants faisant fonctionner la soupape modulatrice sont deux pistons (101, 102) qui ne sont pas reliés mécaniquement l'un à l'autre et qui glissent dans un cylindre (111) réalisé à l'intérieur d'un corps (103) percé d'ouvertures (104 et 105) pour l'accès de la pression à la sortie du cylindre principal des freins droit et gauche, ainsi que d'une ouverture (106) pour lentrée de l'huile de la pompe (107) pour la liaison avec la soupape automatique (pression de référence) (108) pour envoyer la pression modulée à la soupape automatique et (109) pour la vidange.

3. Système de freinage selon la revendication 2, dans laquelle deux épaulements (113 et 114) limitent le mouvement des pistons (101 et 102) qui ne sont pas mécaniquement liés l'un à l'autre.

4. Système de freinage selon la revendication 2, caractérisé par le fait qu'est prévue une soupape (120) (de n'importe quel type approprié), qui entraîne l'intervention de la soupape automatique sur la remorque, de sorte que le freinage de secours de la remorque soit assuré lorsque se produit un freinage ou une chute de pression dans le circuit de pression modulée.

5. Système de freinage selon la revendication 1, caractérisé par le fait que la pression modulée qui arrive du modulateur est envoyée, à travers une ouverture (132) contre une surface d'un piston différentiel (131) logé dans un corps de soupape (130), la chambre de soupape étant reliée à travers l'ouverture (133), au carter de l'huile des freins et, à travers une ouverture (134), à la tuyauterie des freins du tracteur, de sorte que la pression modulée agit en série avec la charge appliquée par le conducteur sur la pédale (135) du frein.

Fig.1

Fig. 2

Fig.3

Fig.4

Fig.5